# EUROPEAN PATENT SPECIFICATION

(11) **EP 2 813 403 B1**
(45) Date of publication and mention of the grant of the patent: **15.04.2020**
(21) Application number: 14168477.9
(22) Date of filing: 15.05.2014
(51) Int. Cl.: B60S 1/40

(54) **Wiper system**
Wischsystem
Système d'essuie-glace

(30) Priority: 14.06.2013 CN 201310237078
(43) Date of publication of application: 17.12.2014
(73) Proprietor: Bosch Automotive Products (Changsha) Co., Ltd., Changsha Hunan 410100 (CN)
(72) Inventor: Wang, Tongbin, Changsha, Hunan 410100 (CN); Huang, Haiqing, Changsha, Hunan 410100 (CN)
(74) Representative: Bee, Joachim

(56) References cited:
- EP-A2- 2 426 017
- WO-A1-2010/028866
- WO-A1-2012/072140

## Description

### Technical Field

The invention relates to a wiper blade assembly and a wiper system.

### Background Art

As is well known, wiper systems for vehicles comprise a wiper motor for providing power and outputting a rotational movement, a wiper blade for performing a reciprocating swinging movement on a windshield of the vehicle to wipe off things thereon, such as rain, dirt, leaves etc, a wiper arm for supporting and directly driving the wiper blade, and a movement transforming assembly for transmitting the rotational movement outputted by the wiper motor to the wiper arm and the wiper blade and converting it into the reciprocating swinging movement of the wiper arm and the wiper blade.

Typically, the wiper arm and the wiper blade of the wiper system are connected together by means of by means of a specific connecting structure. The connecting structure generally comprises a wiper arm connector retained on the wiper arm, an adaptor retained on the wiper blade, and a connector connected between the wiper arm connector and the adaptor.

Different connecting structures for different wiper arms and wiper blades or for different wiper arm connectors and adaptors retained respectively on the wiper arms and the wiper blades have been developed.

There is a wiper arm in the prior art which comprises a wiper arm connector at an end where it is connected with the wiper blade. The wiper arm connector comprises a top wall and side walls extending out from opposite sides of the top wall. The top wall of this type of wiper arm connector is formed with an opening to be engaged with the connector.

There is a connector which can be used cooperatively with the wiper arm having the above structure, the connector being configured for connecting the wiper arm with the wiper blade by means of the adaptor retained on the wiper blade. The connector is connected to the adaptor of the wiper blade by means of a pivoting structure and is rotatable relative to the adaptor.

The connector comprises a body portion and a protruding portion extending out from the body portion toward the wiper arm, the protruding portion being configured to be received in the opening of the wiper arm connector when the wiper arm is connected to the connector by means of the wiper arm connector. In this way, the wiper arm and the connector are assembled together.

When separating the wiper arm from the wiper blade, a user press a head portion of the connector to rotate the entire connector relative to the adaptor, and then the protruding portion of the connector is disengaged from the opening of the wiper arm connector. It is necessary for the entire connector to be rotated whether it is desired to assemble or to separate the wiper arm and the wiper blade.

EP 2 426 017 A2 describes a connecting assembly for a windshield wiper. The connecting assembly includes a fixing member and a supporting arm. The connecting assembly further includes a pivoting base and a cover cap. The pivoting base comprises an engaging portion, a first insertion portion and a second insertion portion extending from the engaging portion in opposite directions. The engaging portion is engaged with the fixing member. The first insertion portion and the second insertion portion are symmetrical to each other with respect to the engaging portion. The cover cap is assembled with the supporting arm and put outside the first insertion portion and the second insertion portion in dual directions.

Further examples of wiper blade systems are disclosed in WO 2012/072140 A1 and WO 2010/028866 A1.

It is desired to develop a new structure of the connector.

### Summary of the Invention

An object of the invention is to improve the structure of a connector between a wiper arm and a wiper blade of a wiper system, so that the assembling and detaching process of the wiper arm and the wiper blade are simplified and the service life of the connector is prolonged.

The invention provides a wiper blade assembly with the features of claim 1.

According to a preferred embodiment, the resilient engaging portion comprises an elastic arm portion extending out cantileveredly from the body portion and a stop portion at a free end of the arm portion, and the stop portion can be moved to be engaged into the opening from the plug-in space or be disengaged from the opening by deforming the arm portion elastically. Preferably, the engaging portion is formed by a U shaped cutout in a wall of the body portion. The stop portion can be moved along a direction substantially perpendicular to the insertion direction.

According to a preferred embodiment, the stop portion comprises a rear edge provided at a front location of the inserting direction and a front edge provided at a rear location of the inserting direction, and the rear edge is raised up relative to the front edge.

According to a preferred embodiment, the opening extends through an outer wall of the wiper arm connector from the plug-in space, and the rear edge can be engaged into and through the opening and extend beyond the outer wall.

According to a preferred embodiment, the connector comprises a protruding portion extending out from the body portion at its substantially middle location along its widthwise direction, the protruding portion being configured to be received in a recess formed in the adaptor when the connector is assembled to the adaptor correctly and to be interfered with the adaptor when the connector is assembled to the adaptor in an incorrect orientation.

According to a preferred embodiment, the wiper blade comprises a scraping strip abutting a surface to be wiped and having an elongated shape, a lengthwise direction of the scraping strip being perpendicular to the axis.

According to a preferred embodiment, the connector is manufactured by injection molding. Preferably, the connector is made of an elastic material, for example, plastic.

According to a further aspect of the invention, a wiper system for a vehicle is provided, wherein the wiper system comprises a wiper arm and the wiper blade assembly described as above, the wiper arm being connected with the connector.

According to the invention, the resilient engaging portion of the connector is deformable elastically relative to the body portion of the connector. It is merely needed to operate the resilient engaging portion, instead of the entire connector being rotated, during the assembling and detaching of the wiper arm and the wiper blade. The connecting structure constructed as above has a high strength, a high reliability, and a simplified operation. In particular, for a high speed vehicle, the wiper system thus constructed operates with a more stable performance, its wiper arm and its wiper blade has a better anti-wobble property, and drift phenomena can be effectively avoided.

### Brief Description of the Drawings

Other advantages and features of the invention will be apparent from the description of embodiments of the invention in conjunction with the drawings, in which:
Figs. 1-4 are views showing steps of assembling process of a wiper arm and a wiper blade of a wiper system by means of a connector according to the invention, wherein Fig. 1 is an exploded view, Figs. 2 and 3 are views showing assembling steps of an adaptor of the wiper blade with the connector according to the invention, and Fig. 4 shows the wiper arm and the wiper blade after assembled together;
Figs. 5-9 are various views of the connector of according to the invention, wherein Fig. 5 is a perspective (isometric) view of the connector, Fig. 6 is a top view of the connector of

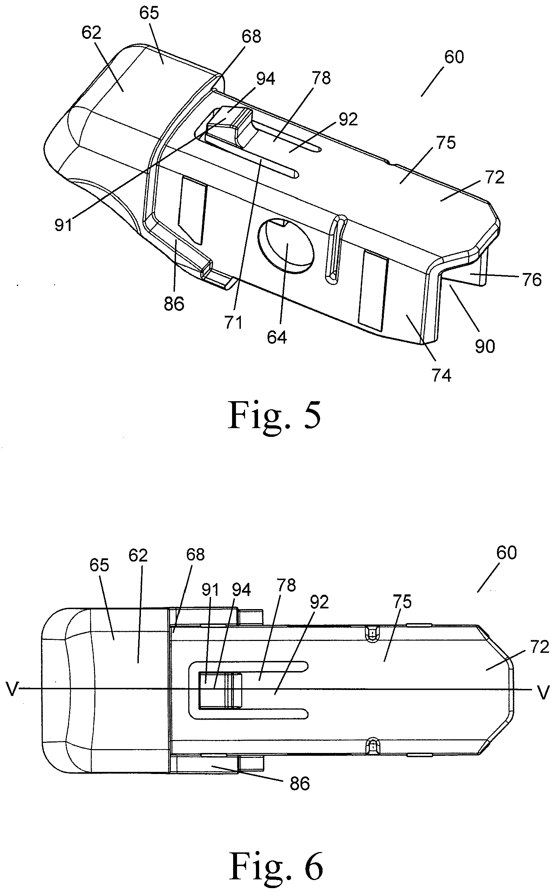

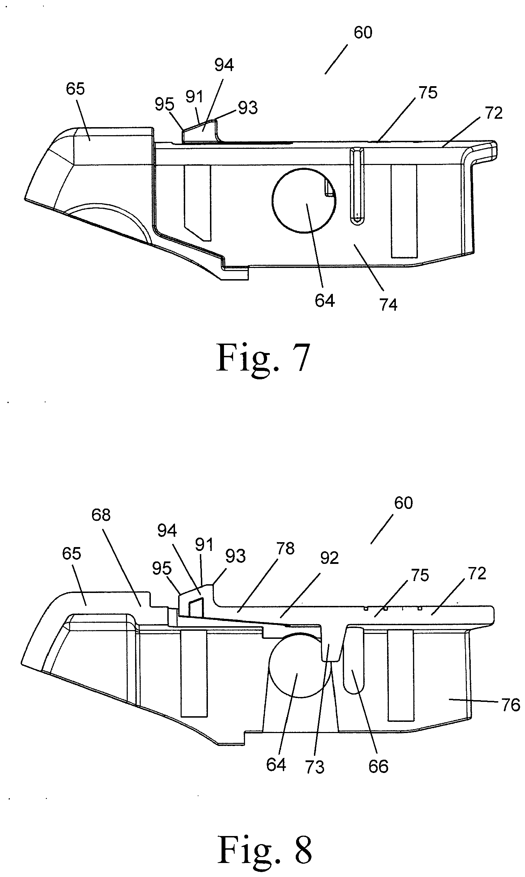

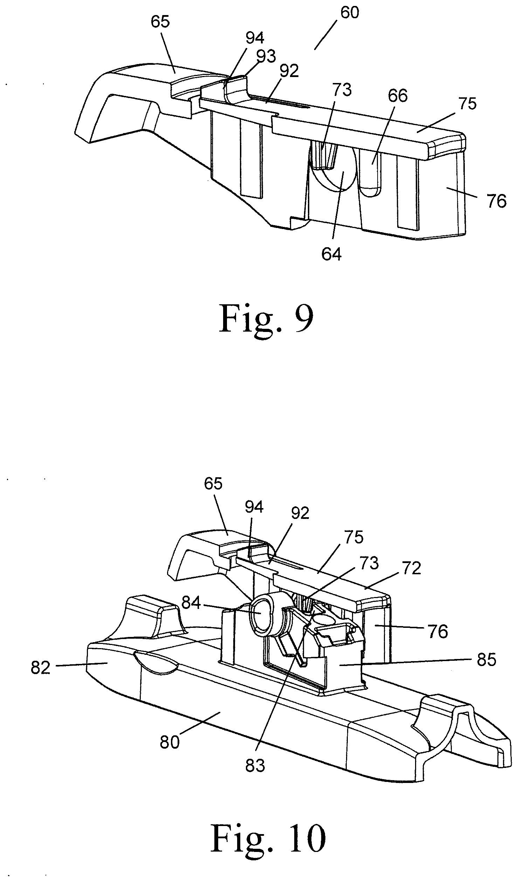

Fig. 5, Fig. 7 is a front view of the connector of Fig. 5, Fig. 8 is a cross sectional view of an upper portion formed along a line V-V of Fig. 6, and Fig. 9 is another view of Fig. 8 at another angle of view;
Fig. 10 is an assembled view showing that the connector shown in Fig. 9 is assembled on the adaptor; and

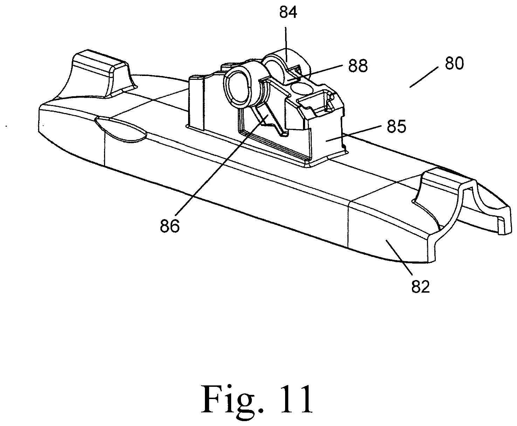

Fig. 11 is a perspective view of the adaptor.

### Detailed Description of Preferred Embodiments

Some preferred embodiments of the invention will be described in details with reference to the drawings.

A wiper system according to the invention comprises a wiper motor assembly (not shown) for providing power and outputting a rotational movement, a wiper arm assembly for performing a reciprocating swinging movement on a windshield of a vehicle, and a movement converting assembly for converting the rotational movement of the wiper motor assembly into the reciprocating swinging movement of the wiper arm assembly.

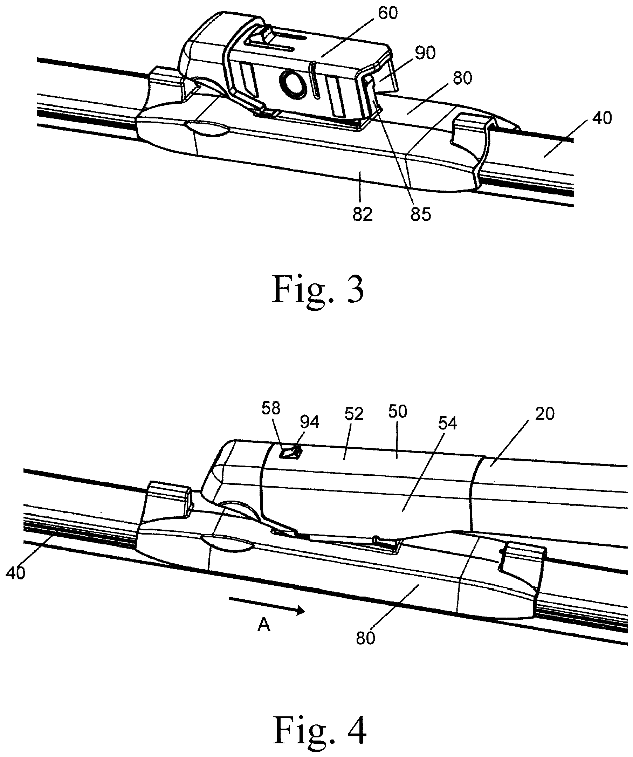

The wiper arm assembly of the wiper system generally comprises a wiper arm 20 (Fig. 4), a wiper blade 40 supported by the wiper arm 20, and a connecting structure between the wiper arm 20 and the wiper blade 40.

For the purpose of better understanding the invention, a plurality of directional terms are defined herein before the connecting structure between the wiper arm 20 and the wiper blade 40 is described in detail, wherein an insertion direction A along which a connector is inserted into the wiper arm 20 when the wiper arm 20 and the wiper blade 40 are assembled is shown in Fig. 4. A "front end" of the connector refers to an end of the connector opposite to the end where it is connected to the wiper arm 20, and a "rear end" of the connector refers to an end of the connector proximate to the wiper arm 20, and that is, the insertion direction A is the direction from the front end of the connector toward the rear end. The term "upward" refers to a direction from the wiper blade 40 toward the wiper arm 20, and the term "downward" refers to the opposite direction. Thus, the forward and rearward direction is substantially consistent with a lengthwise direction or a lognitudinal direction or an extending direction of the wiper blade 40.

In general, the wiper arm 20 comprises at its front end a wiper arm connector 50 (Fig. 4) to be connected to the wiper blade 40 by means of the connecting structure.

According to the invention, the connecting structure between the wiper arm 20 and the wiper blade 40 comprises an adaptor 80 and a connector 60 which functions to connect the wiper arm connector 50 with the adaptor 80, wherein the adaptor 80 is retained in the middle of the wiper blade 40 along its extending direction.

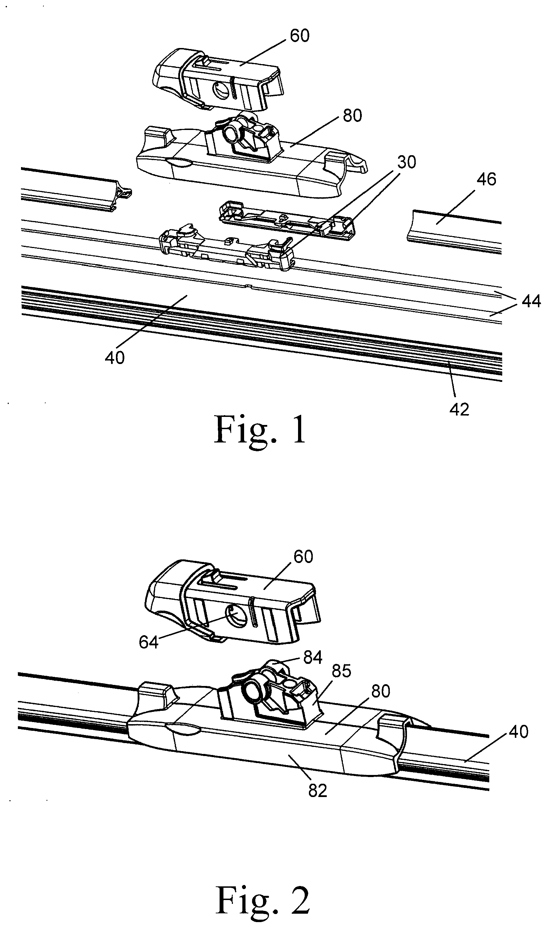

Figs. 1-4 show steps of assembling process of the wiper arm 20 and the wiper blade 40 of the wiper system. Fig. 1 is an exploded view of components during the assembling process of the wiper arm 20 and the wiper blade 40, Fig. 2 is a view showing that the adaptor 80 is retained on the wiper blade 40, Fig. 3 shows the connector 60 being connected to the adaptor 80, and Fig. 4 shows that the wiper arm 20 is assembled with the wiper blade 40 by means of the wiper arm connector 50, the connector 60 and the adaptor 80.

As can be seen from the exploded view of Fig. 1, the wiper blade 40 according to the invention mainly comprises a rubber member 42 which directly contacts the vehicle windshield and performs a wiping function, two ridges 44 which provide support for the rubber member 42, and a spoiler 46 which covers the ridges 44 and the rubber member 42.

The spoiler 46 comprises front and rear sections which are separate from each other. Between the front and rear sections of the spoiler 46, the adaptor 80 is fixed on the ridges 44 of the wiper blade 40 by means of two connecting elements 30 arranged symmetrically, as shown in Fig. 1. The two connecting elements 30 arranged symmetrically are fixed on opposite sides of the two ridges 44.

The adaptor 80 comprises a base portion 82 which extends along the lognitudinal direction of the wiper blade 40 and is retained on the wiper blade 40 and an engaging portion 85 which extends out from the base portion 82 and is configured to be connected with the connector 60. Fig. 2 shows that the adaptor 80 is retained on the wiper blade 40 between the front and rear sections of the spoiler 46 by means of the two connecting elements 30.

The connector 60 is configured for connecting the wiper arm connector 50 of the wiper arm 20 with the adaptor 80. Fig. 3 shows that the connector 60 is connected to the adaptor 80 and can be rotated relative to the adaptor 80. Fig. 4 shows that the wiper arm 20 is connected to the wiper blade 40 by means of the wiper arm connector 50, the connector 60 and the adaptor 80 and can drive the wiper blade 40 to reciprocatingly swing as desired.

The connecting structures between the wiper arm connector 50 and the connector 60 and between the connector 60 and the adaptor 80 will be described herein in detail.

The connection between the wiper arm connector 50 and the connector 60 is achieved by a stop structure. The stop structure comprises an engaging portion on the wiper arm connector 50 and a resilient engaging portion on the connector 60.

As illustrated, the wiper arm connector 50 comprises a top wall 52 and side walls extending out from opposite sides of the top wall 52, only one of which is visible in Fig. 4. The top wall 52 of the wiper arm connector 50 is provided with an opening 58 which forms the engaging portion.

Fig. 5 is an isometric view of the connector 60. The connector 60 comprises a body portion 68 and a resilient engaging portion 78 which are integrally formed. The resilient engaging portion 78 is configured to be deformed elastically relative to the body portion 68 when the wiper arm connector 50 of the wiper arm 20 is assembled and detached. In particular, in the illustrated embodiment, the resilient engaging portion 78 is in a form of a cantilever extending out from the body portion 68.

The body portion 68 comprises a front portion 65 and a rear portion 75. The rear portion 75 comprises a top wall 72 and side walls 74 and 76 extending downwards and substantially perpendicularly from opposite sides of the top wall 72. A top wall 62 of the front portion 65 is designed to be raised up relative to the top wall 72 of the rear portion 75, so that the top wall 52 of the wiper arm connector 50 is substantially flush with the top wall 62 of the front portion 65 when the wiper arm connector 50 is mounted on the connector 60. Likewise, side walls extending downwards from opposite sides of the top wall 62 of the front portion 65 is substantially flush with the two side walls of the wiper arm connector 50 when the wiper arm connector 50 is mounted on the connector 60, which can be seen from Fig. 4.

The top wall 72 and the two side walls 74 and 76 of the rear portion 75 of the connector 60 defines an accommodating portion 90 which is configured for receiving the engaging portion 85 of the adaptor 80 when the connector 60 is mounted on the adaptor 80.

The resilient engaging portion 78 is formed on the top wall 72 of the rear portion 75 of the connector 60, and comprises an arm portion 92 extending out cantileveredly from the top wall 72 and a stop portion 94 extending out from a free end of the arm portion 92 along a direction towards the wiper arm 20. The stop portion 94 of the connector 60 is received in the opening 58 of the wiper arm connector 50 when the connector 60 is assembled onto the wiper arm connector 50 along the rearward direction.

In addition, as shown in Figs. 7 and 8, the stop portion 94 comprises an inclined top surface 91, and the top surface 91 comprises a rear edge 93 along the insertion direction which is above its opposite front edge 95 in an upward and downward direction. Advantageously, the rear edge 93 extends through the opening 58 and protrudes from the top wall 52 of the wiper arm connector.

According to the advantageous features of the invention described above, when the connector 60 is inserted and assembled to the wiper arm connector 50 at the front end of the wiper arm 20 along the rearward direction, the top surface 91 of the stop portion 94 of the resilient engaging portion 78 of the connector 60 is biased downwards by an inside of the top wall 52 of the wiper arm connector 50 so that the arm portion 92 of the resilient engaging portion 78 is deformed elastically downwards toward the accommodating portion 90 relative to the body portion 68 of the connector 60, and in particular relative to the rear portion 75. Upon the wiper arm connector 50 being mounted into position, the stop portion 94 of the resilient engaging portion 78 is aligned with the opening 58 of the wiper arm connector 50 so that the resilient engaging portion 78 is returned back its original state under the elasticity of its own. At this time, the stop portion 94 of the resilient engaging portion 78 is snapped into the opening 58 of the wiper arm connector 50, and a secure engagement of the wiper arm connector 50 of the wiper arm 20 with the connector 60 is established.

Therefore, it can be said, on one hand, the wiper arm connector 50 of the wiper system according to the invention comprises the engaging portion, in particular the opening 58, and on the other hand, the connector 60 of the wiper system comprises the resilient engaging portion 78 which is deformable elastically relative to the body portion 68 of the connector 60, wherein the resilient engaging portion 78 can be engaged with the engaging portion of the wiper arm connector 50 to connect the wiper arm 20 with the wiper blade 40 of the wiper system together.

Due to the advantageous features described above, it is only needed for a user, for example, to press the rear edge 93 of the stop portion 94 of the connector 60 above the top wall 52 in order to deform elastically the arm portion 92 downwards relative to the body portion 68 of the connector 60, the stop portion 94 can be disengaged from the opening 58 and detachment of the wiper blade 40 and the wiper arm 20 can be achieved, without having to moving or rotating the entire connector 60 and without needing any additional tools. In this way, the operation is simplified on one hand and the service life of the connector 60 can be prolonged on the other hand.

The engagement of the connector 60 with the adaptor 80 is achieved by means of a pivoting structure.

According to the invention, the connector 60 is provided at the opposite side walls with two pivoting holes 64 having a common central axis, the common central axis being perpendicular or substantially perpendicular to the lognitudinal extending direction of the wiper blade 40. Correspondingly, the adaptor 80 comprises pivoting posts 84 adapted to be received in the pivoting holes 64 of the connector 60. As illustrated, the pivoting posts 84 can be configured as hollow cylinders. The pivoting holes 64 of the connector 60 and the pivoting posts 84 of the adaptor 80 in combination constitute the pivoting structure of the connector 60 and the adaptor 80. It should be understood by the skilled in the art that other types of pivoting structures can also be adopted, and for example, the connector 60 and the adaptor 80 comprises the pivoting posts and the pivoting holes to be mated with each other, respectively.

The wiper arm connector 50 of the wiper arm 20 and the connector 60 are securely engaged with each other, and the connector 60 and the adaptor 80 are engaged with each other by means of the pivoting structure, the adaptor 80 being fixed on the wiper blade 40. In this way, the wiper arm 20 connected with the connector 60 and the wiper blade 40 connected with the adaptor 80 can be securely connected together on one hand to ensure that the wiper blade 40 will not be disengaged from the wiper arm 20 during the operation of the wiper system, and can be rotated relative to each other about the common central axis on the other hand to achieve the wiping effect of the wiper system.

For the purpose of detaching the adaptor 80 from the connector 60, each of the side walls 74 and 76 of the rear portion 75 of the connector 60 comprises a guiding projection 66 protruding into the accommodating portion 90 from the respective side wall, as shown in Fig. 9. The adaptor 80 is provided at either side with a guiding slot 86 (Fig. 11) which is configured to be mated with the guiding projection 66.

When the connector 60 is assembled with the adaptor 80, the guiding projections 66 of the connector 60 are received in the guiding slots 86 of the adaptor 80. As shown in Fig. 10, rotating the connector 60 to move the front portion 65 of the connector 60 away from the adaptor 80 results in that the guiding projections 66 is moved under the guidance of the guiding slots 86, and after rotating the connector 60 through a certain angle, the guiding projections 66 on opposite sides of the connector 60 are flared away from each other by the guiding slots 86 so that the two side walls of the connector 60 are flared away from each other and thus the connector 60 can be detached from the adaptor 80.

According to another advantageous feature of the invention, the connector 60 comprises an error-proofing structure. In particular, the connector 60 comprises a protruding portion 73 extending downwards from the top wall 72 of the rear portion 75. Correspondingly, a recess 83 is provided substantially at a rear location between two pivoting posts 84 of the adaptor 80, which is configured for receiving the protruding portion 73 of the connector 60. In a case that the connector 60 is correctly mounted on the adaptor 80, the protruding portion 73 of the connector 60 is received in the recess 83 of the adaptor 80. If the connector 60 is mounted in an incorrect orientation, the protruding portion 73 of the connector 60 will be interfered with the pivoting posts 84 or other solid portions of the adaptor 80. Therefore, the connector 60 can not be mounted onto the adaptor 80 correctly if the connector 60 is in the incorrect orientation. In this way, incorrect assembling can be found and corrected at the earliest time.

In this embodiment, the protruding portion 73 extends out from the connector 60 at its substantially middle location along a widthwise direction of the connector 60. However, it can be understood to the skilled in the art that this location is not necessary and any structure that can achieve the error-proofing function can be adopted.

According to a preferred embodiment, the arm portion 92 of the resilient engaging portion 78 of the connector 60 is formed by a U shaped cutout 71 in the top wall 72 of the rear portion 75 of the connector 60, which can be formed by cutting, injection molding or any other suitable process.

According to a preferred embodiment of the invention, the connector 60 can be made of a resilient material, for example, plastics. Alternatively, the connector 60 can be an integrally molded part.

The connector 60 according to the invention enables the wiper blade 40 with the above adaptor 80 retained thereon to be assembled with the wiper arm 20 with the above wiper arm connector 50, forming a novel wiper system.

A connector of a wiper system according to the invention comprises a body portion and a resilient engaging portion which is deformable elastically relative to the body portion. With the invention, only the resilient engaging portion is deformed elastically, instead of the entire connector being rotated, during the assembling and detaching of the wiper arm and the wiper blade, and no additional tools are needed. The connecting structure constructed as above has a high strength, a high reliability, and a simplified operation. In particular, for a high speed vehicle, the wiper system thus constructed operates with a more stable performance, its wiper arm and its wiper blade has a better anti-wobble property, and drift phenomena can be effectively avoided.

Although embodiments of the invention have been described as above, the invention is not intended to be limited to the embodiments shown and illustrated. Feature described with regard to one embodiment are also applied to other embodiments, and features described with regard to different embodiments can be combined into new embodiments. Rather, various variants and modifications to the embodiments described as above can be made to the skilled in the art without departing from the scope of the invention which is only defined by the following claims.

## Claims

1. A wiper blade assembly comprising:
a wiper blade (40) and an adaptor (80) fixed relative to the wiper blade (40), and
a connector (60) being connected to the adaptor (80) rotatably about an axis and being combinable between a wiper arm (20) comprising at its front end a wiper arm connector (50) comprising a plug-in space and an opening (58) communicated with the plug-in space and the wiper blade (40), wherein the connector (60) comprises:
a body portion (68) which can be mounted to the adaptor (80) and can be inserted into the plug-in space along an inserting direction (A), the inserting direction (A) being perpendicular to the axis, wherein the body portion (68) comprises a front portion (65) and a rear portion (75); and
an resilient engaging portion (78) which extends out from the body portion (68) and is configured to be elastically deformed into a releasing position under an external force and to return to a blocking position due to the reduced elastic deformation upon removing the external force, wherein the body portion (68) and the resilient engaging portion (78) can be moved freely in the plug-in space when the resilient engaging portion (78) is in the releasing position, and the resilient engaging portion (78) can be engaged in the opening (58) to block the body portion (68) from being moved in the plug-in space when the resilient engaging portion (78) is in the blocking position;
wherein the connector (60) comprises a pair of side walls (74, 76) and the adaptor (80) comprises a pivoting shaft and is mounted between the pair of side walls (74, 76),
wherein each side wall (74, 76) of the connector (60) is provided with a pivoting hole (64), and the pivoting hole (64) and the pivoting shaft constitute a pivoting structure between the body portion (68) and the adaptor (80) so that the connector (60) can be pivoted about the axis between an operating position and a detached position relative to the adaptor (80),
**characterized in that** each of the side walls (74, 76) is provided with a guiding portion (66) inside of it, wherein each guiding portion (66) protrudes from the respective side wall (74, 76), and the adaptor (80) comprises a pair of guiding slots (86), wherein each guiding slot (86) is configured to be mated with the corresponding guiding portion (66),
wherein, when the connector (60) is assembled with the adaptor (80), the guiding portions (66) of the connector (60) are received in the guiding slots (86) of the adaptor (80), and
wherein rotating the connector (60) to move the front portion (65) of the connector (60) away from the adaptor (80) results in the guiding portions (66) being moved under the guidance of the guiding slots (86), and after rotating the connector (60) through a certain angle, the guiding portions (66) on opposite sides of the connector (60) are flared away from each other by the guiding slots (86) so that the two side walls of the connector (60) are flared away from each other to cause the pivoting shaft to be disengaged from the pivoting holes (64) and thus the connector (60) can be detached from the adaptor (80) when the connector (60) is pivoted from the operation position to the detached position relative to the adaptor (80).

2. The wiper blade assembly of claim 1, wherein the wiper blade assembly comprises the wiper arm connector (50) mounted on the connector (60), and wherein a top wall (62) of the front portion (65) is designed to be raised up relative to a top wall (72) of the rear portion (75), so that a top wall (52) of the wiper arm connector (50) is flush with the top wall (62) of the front portion (65).

3. The wiper blade assembly of claim 1, wherein the resilient engaging portion (78) comprises an elastic arm portion (92) extending out cantileveredly from the body portion (68) and a stop portion (94) at a free end of the arm portion (92), and the stop portion (94) can be moved to be engaged into the opening (58) from the plug-in space or be disengaged from the opening (58) by deforming the arm portion (92) elastically.

4. The wiper blade assembly of claim 3, wherein the stop portion (94) is engaged into the opening (58) when the body portion (68) of the connector (60) is inserted into the plug-in space of the wiper arm connector (50) and the wiper arm connector (50) becomes in contact with the front portion (65).

5. The wiper blade assembly of claim 3, wherein the stop portion (94) comprises a rear edge (93) provided at a front location of the inserting direction (A) and a front edge provided at a rear location of the inserting direction (A), and the rear edge (93) is raised up relative to the front edge.

6. The wiper blade assembly of claim 5, wherein the opening (58) extends through an outer wall of the wiper arm connector (50) from the plug-in space, and the rear edge (93) can be engaged into and through the opening (58) and extend beyond the outer wall.

7. The wiper blade assembly of any one of claims 1 and 3-6, wherein the connector (60) comprises a protruding portion (73) extending out from the body portion (68) at its substantially middle location along its widthwise direction, the protruding portion (73) being configured to be received in a recess (83) formed in the adaptor (80) when the connector (60) is assembled to the adaptor (80) correctly and to be interfered with the adaptor (80) when the connector (60) is assembled to the adaptor (80) in an incorrect orientation.

8. The wiper blade assembly of claim 1, wherein the wiper blade (40) comprises a scraping strip abutting a surface to be wiped and having an elongated shape, a lengthwise direction of the scraping strip being perpendicular to the axis.

9. The wiper blade assembly of claim 1, wherein the connector (60) is manufactured by injection molding.

10. A wiper system for a vehicle, wherein the wiper system comprises a wiper arm (20) and a wiper blade assembly according to any one of claims 1 to 9, the wiper arm (20) being connected with the connector (60).

## Patentansprüche

1. Wischblatt-Anordnung, umfassend:
ein Wischblatt (40) und einen Adapter (80), der relativ zu dem Wischblatt (40) befestigt ist, und
einen Verbinder (60), der mit dem Adapter (80) um eine Achse drehbar verbunden und zwischen einem Wischarm (20), der an seinem vorderen Ende einen Wischarm-Verbinder (50) umfasst, der einen Steckraum und eine Öffnung (58) umfasst, die mit dem Steckraum in Verbindung steht, und dem Wischblatt (40) kombinierbar ist, wobei der Verbinder (60) Folgendes umfasst:
einen Körperabschnitt (68), der an dem Adapter (80) montiert werden kann und in den Steckraum entlang einer Einsetzrichtung (A) eingesetzt werden kann, wobei die Einsetzrichtung (A) senkrecht zu der Achse ist, wobei der Körperabschnitt (68) einen vorderen Abschnitt (65) und einen hinteren Abschnitt (75) umfasst; und
einen elastischen Eingriffsabschnitt (78), der sich von dem Körperabschnitt (68) nach außen erstreckt und eingerichtet ist, um in eine Freigabeposition unter einer externen Kraft elastisch verformt zu werden und um in eine Sperrposition aufgrund der reduzierten elastischen Verformung bei Entfernen der externen Kraft zurückzukehren, wobei der Körperabschnitt (68) und der elastische Eingriffsabschnitt (78) frei in dem Steckraum bewegt werden können, wenn der elastische Eingriffsabschnitt (78) in der Freigabeposition ist, und der elastische Eingriffsabschnitt (78) in der Öffnung (58) in Eingriff kommen kann, um den Körperabschnitt (68) zu sperren, damit er sich in dem Steckraum nicht bewegt, wenn der elastische Eingriffsabschnitt (78) in der Sperrposition ist;
wobei der Verbinder (60) ein Paar Seitenwände (74, 76) umfasst und der Adapter (80) einen Schwenkschaft umfasst und zwischen dem Paar Seitenwänden (74, 76) montiert ist,
wobei jede Seitenwand (74, 76) des Verbinders (60) mit einem Schwenkloch (64) versehen ist und das Schwenkloch (64) und der Schwenkschaft eine Schwenkstruktur zwischen dem Körperabschnitt (68) und dem Adapter (80) bilden, so dass der Verbinder (60) um die Achse zwischen einer Betriebsposition und einer gelösten Position relativ zu dem Adapter (80) geschwenkt werden kann,
**dadurch gekennzeichnet, dass**
jede der Seitenwände (74, 76) mit einem Führungsabschnitt (66) im Inneren davon versehen ist, wobei jeder Führungsabschnitt (66) von der jeweiligen Seitenwand (74, 76) vorsteht, und der Adapter (80) ein Paar Führungsschlitze (86) umfasst, wobei jeder Führungsschlitz (86) eingerichtet ist, um mit dem entsprechenden Führungsabschnitt (66) zusammengefügt zu werden,
wobei, wenn der Verbinder (60) mit dem Adapter (80) zusammengesetzt wird, die Führungsabschnitte (66) des Verbinders (60) in den Führungsschlitzen (86) des Adapters (80) aufgenommen werden, und
wobei ein Drehen des Verbinders (60), um den vorderen Abschnitt (65) des Verbinders (60) von dem Adapter (80) weg zu bewegen, dazu führt, dass die Führungsabschnitte (66) unter der Führung der Führungsschlitze (86) bewegt werden, und nach dem Drehen des Verbinders (60) um einen bestimmten Winkel die Führungsabschnitte (66) auf gegenüberliegenden Seiten des Verbinders (60) voneinander durch die Führungsschlitze (86) weg aufgeweitet werden, so dass die zwei Seitenwände des Verbinders (60) voneinander weg aufgeweitet werden, um zu veranlassen, dass der Schwenkschaft aus dem Eingriff mit den Schwenklöchern (64) gelöst wird und dadurch der Verbinder (60) von dem Adapter (80) gelöst werden kann, wenn der Verbinder (60) von der Betriebsposition in die gelöste Position relativ zu dem Adapter (80) geschwenkt wird,

2. Wischblatt-Anordnung nach Anspruch 1, wobei die Wischblatt-Anordnung den Wischarm-Verbinder (50), der auf dem Verbinder (60) montiert ist, umfasst, und wobei eine Deckwand (62) des vorderen Abschnitts (65) ausgelegt ist, um relativ zu der Deckwand (72) des hinteren Abschnitts (75) angehoben zu werden, so dass eine Deckwand (52) des Wischarm-Verbinders (50) mit der Deckwand (62) des vorderen Abschnitts (65) bündig ist.

3. Wischblatt-Anordnung nach Anspruch 1, wobei der elastische Eingriffsabschnitt (78) einen elastischen Armabschnitt (92), der sich von dem Körperabschnitt (68) auslegerhaft nach außen erstreckt, und einen Anschlagabschnitt (94) an einem freien Ende des Armabschnitts (92) umfasst und der Anschlagabschnitt (94) bewegt werden kann, um in die Öffnung (58) von dem Steckraum in Eingriff zu kommen oder aus dem Eingriff mit der Öffnung (58) durch elastisches Verformen des Armabschnitts (92) gelöst zu werden.

4. Wischblatt-Anordnung nach Anspruch 3, wobei der Anschlagabschnitt (94) in die Öffnung (58) in Eingriff kommt, wenn der Körperabschnitt (68) des Verbinders (60) in den Steckraum des Wischarm-Verbinders (50) eingesetzt wird, und der Wischarm-Verbinder (50) mit dem vorderen Abschnitt (65) in Kontakt kommt.

5. Wischblatt-Anordnung nach Anspruch 3, wobei der Anschlagabschnitt (94) eine hintere Kante (93), die an einer vorderen Stelle der Einsetzrichtung (A) vorgesehen ist, und eine vordere Kante, die an einer hinteren Stelle der Einsetzrichtung (A) vorgesehen ist, umfasst und die hintere Kante (93) relativ zu der vorderen Kante angehoben ist.

6. Wischblatt-Anordnung nach Anspruch 5, wobei sich die Öffnung (58) durch eine äußere Wand des Wischarm-Verbinders (50) von dem Steckraum erstreckt und die hintere Kante (93) in und durch die Öffnung (58) in Eingriff kommen und sich über die äußere Wand hinaus erstrecken kann.

7. Wischblatt-Anordnung nach einem der Ansprüche 1 und 3-6, wobei der Verbinder (60) einen vorstehenden Abschnitt (73) umfasst, der sich von dem Körperabschnitt (68) an seiner im Wesentlichen mittigen Stelle entlang seiner Breitenrichtung nach außen erstreckt, wobei der vorstehende Abschnitt (73) eingerichtet ist, um in einer Vertiefung (83), die in dem Adapter (80) gebildet ist, aufgenommen zu werden, wenn der Verbinder (60) mit dem Adapter (80) korrekt zusammengesetzt wird, und um den Adapter (80) zu stören, wenn der Verbinder (60) mit dem Adapter (80) in einer inkorrekten Ausrichtung zusammengesetzt wird.

8. Wischblatt-Anordnung nach Anspruch 1, wobei das Wischblatt (40) eine Abstreifleiste umfasst, die an einer zu wischenden Fläche anliegt und eine längliche Form aufweist, wobei eine Längsrichtung der Abstreifleiste senkrecht zu der Achse ist.

9. Wischblatt-Anordnung nach Anspruch 1, wobei der Verbinder (60) durch Spritzgießen hergestellt ist.

10. Wischsystem für ein Fahrzeug, wobei das Wischsystem einen Wischarm (20) und eine Wischblatt-Anordnung nach einem der Ansprüche 1 bis 9 umfasst, wobei der Wischarm (20) mit dem Verbinder (60) verbunden ist.

## Revendications

1. Ensemble balai d'essuie-glace comprenant :
un balai d'essuie-glace (40) et un adaptateur (80) fixe par rapport au balai d'essuie-glace (40), et un raccord (60) relié à l'adaptateur (80) de manière à pouvoir tourner autour d'un axe et pouvant être combiné entre un bras d'essuie-glace (20) comprenant à son extrémité avant un raccord de bras d'essuie-glace (50) comprenant un espace d'enfichage et une ouverture (58) communiquant avec l'espace d'enfichage et le balai d'essuie-glace (40), dans lequel le raccord (60) comprend :
une partie corps (68) qui peut être montée sur l'adaptateur (80) et qui peut être insérée dans l'espace d'enfichage le long d'un sens d'insertion (A), le sens d'insertion (A) étant perpendiculaire à l'axe, dans lequel la partie corps (68) comprend une partie avant (65) et une partie arrière (75) ; et
une partie d'emboîtement élastique (78) qui s'étend hors de la partie corps (68) et qui est conçue pour se déformer élastiquement dans une position de déblocage sous l'effet d'une force extérieure et pour retourner à une position de blocage du fait de la déformation élastique réduite lors du retrait de la force extérieure, dans lequel la partie corps (68) et la partie d'emboîtement élastique (78) peuvent se déplacer librement dans l'espace d'enfichage lorsque la partie d'emboîtement élastique (78) est dans la position de déblocage, et la partie d'emboîtement élastique (78) peut s'emboîter dans l'ouverture (58) pour empêcher la partie corps (68) de se déplacer dans l'espace d'enfichage lorsque la partie d'emboîtement élastique (78) et dans la position de blocage ;
dans lequel le raccord (60) comprend une paire de parois latérales (74, 76) et l'adaptateur (80) comprend un arbre de pivotement et est monté entre la paire de parois latérales (74, 76),
dans lequel chaque paroi latérale (74, 76) du raccord (60) est pourvue d'un trou de pivotement (64), et le trou de pivotement (64) ainsi que l'arbre de pivotement constituent une structure de pivotement entre la partie corps (68) et l'adaptateur (80), de manière que le raccord (60) puisse pivoter autour de l'axe entre une position opérationnelle et une position détachée par rapport à l'adaptateur (80),
**caractérisé en ce que** :
chacune des parois latérales (74, 76) est pourvue en son sein d'une partie de guidage (66), dans lequel chaque partie de guidage (66) fait saillie depuis la paroi latérale respective (74, 76), et l'adaptateur (80) comprend une paire de fentes de guidage (86), dans lequel chaque fente de guidage (86) est conçue pour s'accoupler avec la partie de guidage correspondante (66),
dans lequel, lorsque le raccord (60) est assemblé à l'adaptateur (80), les parties de guidage (66) du raccord (60) sont reçues dans les fentes de guidage (86) de l'adaptateur (80), et
dans lequel la rotation du raccord (60) pour écarter de l'adaptateur (80) la partie avant (65) du raccord (60) a pour effet de déplacer les parties de guidage (66) suivant le guidage des fentes de guidage (86), et après la rotation du raccord (60) sur un certain angle, les parties de guidage (66) sur des côtés opposés du raccord (60) s'évasent en s'écartant l'une de l'autre au moyen des fentes de guidage (86) de manière que les deux parois latérales du raccord (60) s'évasent en s'écartant l'une de l'autre pour amener l'arbre de pivotement à se retirer des trous de pivotement (64) et que le raccord (60) puisse ainsi se détacher de l'adaptateur (80) lorsque le raccord (60) pivote de la position opérationnelle à la position détachée par rapport à l'adaptateur (80).

2. Ensemble balai d'essuie-glace selon la revendication 1, dans lequel l'ensemble balai d'essuie-glace comprend le raccord de bras d'essuie-glace (50) monté sur le raccord (60), et dans lequel une paroi supérieure (62) de la partie avant (65) est conçue pour être soulevée par rapport à une paroi supérieure (72) de la partie arrière (75), de manière qu'une paroi supérieure (52) du raccord de bras d'essuie-glace (50) soit au même niveau que la paroi supérieure (62) de la partie avant (65).

3. Ensemble balai d'essuie-glace selon la revendication 1, dans lequel la partie d'emboîtement élastique (78) comprend une partie bras élastique (92) s'étendant en porte-à-faux hors de la partie corps (68) et une partie butée (94) à une extrémité libre de la partie bras (92), et la partie butée (94) peut être déplacée pour être logée dans l'ouverture (58) depuis l'espace d'enfichage ou être délogée de l'ouverture (58) par déformation élastique de la partie bras (92).

4. Ensemble balai d'essuie-glace selon la revendication 3, dans lequel la partie butée (94) est logée dans l'ouverture (58) lorsque la partie corps (68) du raccord (60) est insérée dans l'espace d'enfichage du raccord de bras d'essuie-glace (50) et que le raccord de bras d'essuie-glace (50) entre en contact avec la partie avant (65).

5. Ensemble balai d'essuie-glace selon la revendication 3, dans lequel la partie butée (94) comprend un bord arrière (93) situé à une position avant du sens d'insertion (A) et un bord avant situé à une position arrière du sens d'insertion (A), et le bord arrière (93) est soulevé par rapport au bord avant.

6. Ensemble balai d'essuie-glace selon la revendication 5, dans lequel l'ouverture (58) s'étend au travers d'une paroi extérieure du raccord de bras d'essuie-glace (50) depuis l'espace d'enfichage, et le bord arrière (93) peut se loger dans et à travers l'ouverture (58) et s'étendre au-delà de la paroi extérieure.

7. Ensemble balai d'essuie-glace selon l'une quelconque des revendications 1 et 3 à 6, dans lequel le raccord (60) comprend une partie saillante (73) s'étendant hors de la partie corps (68) à sa position sensiblement médiane le long de la direction de sa largeur, la partie saillante (73) étant conçue pour être reçue dans un évidement (83) formé dans l'adaptateur (80) lorsque le raccord (60) est assemblé correctement à l'adaptateur (80) et pour être gênée par l'adaptateur (80) lorsque le raccord (60) est assemblé à l'adaptateur (80) dans une orientation incorrecte.

8. Ensemble balai d'essuie-glace selon la revendication 1, dans lequel le balai d'essuie-glace (40) comprend une bande de raclage venant en butée contre une surface à essuyer et ayant une forme allongée, une direction longitudinale de la bande de raclage étant perpendiculaire à l'axe.

9. Ensemble balai d'essuie-glace selon la revendication 1, dans lequel le raccord (60) est fabriqué par moulage par injection.

10. Système d'essuie-glace destiné à un véhicule, dans lequel le système d'essuie-glace comprend un bras d'essuie-glace (20) et un ensemble balai d'essuie-glace selon l'une quelconque des revendications 1 à 9, le bras d'essuie-glace (20) étant raccordé au raccord (60).
